# DEMANDE DE BREVET EUROPEEN

(11) **EP 2 090 620 A1**
(43) Date de publication de la demande: **19.08.2009**
(21) Numéro de dépôt: 09305132.4
(22) Date de dépôt: 12.02.2009
(51) Int. Cl.: C08L 95/00, C04B 26/02, C04B 26/22, C08L 5/00, E01C 7/08, E01C 19/10

(54) **procédé de fabrication d'un enrobe coule a froid mis en oeuvre en forte épaisseur**

(30) Priorité: 13.02.2008 FR 0850909
(71) Demandeur: COLAS, 92100 Boulogne-Billancourt (FR)
(72) Inventeur: DENEUVILLERS Christine, 78310 MAUREPAS (FR); MONTMORY Pierre, 92380 GARCHES (FR)
(74) Mandataire: Michelet, Alain

(57) **Abrégé**

Procédé de fabrication d'un enrobé coulé à froid capable d'être mis en oeuvre sur une forte épaisseur d'au moins 1,5 cm, ledit enrobé comprenant les constituants suivants :
- un liant hydrocarboné sous forme d'émulsion cationique,
- des granulats,
- de l'eau d'apport et,
- au moins un additif,

**caractérisé en ce que :**
a) au moins un des additifs comprend une gomme synthétique, naturelle ou naturelle modifiée et,
b) on procède à l'ajout de cet additif comprenant une gomme synthétique, naturelle ou naturelle modifiée dans le flux d'émulsion ou dans l'eau d'apport préalablement au mélange desdits constituants.

## Description

La présente invention concerne un procédé de fabrication d'un enrobé coulé à froid mis en oeuvre en forte épaisseur. L'invention concerne également un dispositif pour mettre en oeuvre le procédé de fabrication de l'enrobé coulé à froid, un procédé de réalisation d'une couche de roulement ainsi qu'une couche de roulement.

Les enrobés coulés à froid sont traditionnellement des mélanges d'une émulsion de bitume, de granulats, d'eau et d'additifs spécifiques, dans des proportions définies, malaxés et appliqués de façon uniforme sur une surface proprement préparée.

Selon la définition de la norme NF P 98150 qui régit cette technique, les enrobés coulés à froid connus à ce jour sont avant tout des enrobés pour couches de surfaces destinés à imperméabiliser les supports et à apporter une très bonne adhérence. Ils se caractérisent généralement par :
- l'utilisation exclusive de granulats de roche massive,
- une granularité supérieure ou égale à 4 mm,
- une teneur en fines variant généralement de 5 à 10 %,
- un module de richesse inférieur ou égal à 4.
   Les enrobés coulés à froid sont fabriqués et mis en oeuvre simultanément à
   l'aide de machines spécifiques.

Les enrobés coulés à froid sont généralement appliqués en couches d'épaisseur variant de 0,4 à 1,5 cm selon leur granularité, ils possèdent une vitesse de montée en cohésion rapide qui autorise une réouverture du trafic dans un délai très court, généralement inférieur à 1 heure. Ils sont particulièrement bien adaptés à l'entretien des chaussées pour lequelles ils offrent une bonne rugosité et durabilité tout en assurant une très bonne imperméabilité.

Cependant, les enrobés coulés à froid traditionnels ne permettent pas de fabriquer à froid, un mélange homogène d'enrobé pouvant être mis en oeuvre sur plusieurs centimètres d'épaisseur, c'est-à-dire sur des épaisseurs supérieures à 1,5 cm.

En outre, les enrobés coulés à froid traditionnels ne peuvent pas être appliqués sur des supports trop déformés. En effet, le support ne doit pas présenter de déformations permanentes généralisées supérieures à 1 cm, ni localisées supérieures à 3 cm selon la norme NF EN 13036-7 et NF P 98150. Dans de tels cas, il est nécessaire de procéder à des travaux de préparation tels que le reprofilage à chaud, le fraisage ou d'utiliser des techniques différentes telles que les enrobés à chaud. En règle générale, les enrobés coulés à froid traditionnels sont appliqués en monocouche lorsque le support présente des déformations inférieures à 1 cm, en bicouche lorsque les déformations sont comprises entre 1 cm et moins de 2 cm et non utilisés si les déformations sont supérieures ou égales à 2 cm.

Le procédé de l'invention permet de pallier les inconvénients des enrobés coulés à froid traditionnels. Il permet de fabriquer à froid, avec des matériaux traditionnels, un mélange homogène d'enrobé pouvant être mis en oeuvre sur plusieurs centimètres d'épaisseur, par exemple, sur des épaisseurs supérieures à 1,5 cm, et plus particulièrement sur des épaisseurs comprises entre 2 et 4 cm. Il permet en outre de limiter les travaux préparatoires inhérents à cette technique et rend désormais possible les travaux pour lesquels un enrobé coulé à froid traditionnel ne pouvait convenir jusqu'à présent. Le procédé de l'invention est donc destiné, de préférence, à l'entretien et à la construction des chaussées.

La présente invention a donc pour objet un procédé de fabrication d'un enrobé coulé à froid capable d'être mis en oeuvre sur une forte épaisseur d'au moins 1,5 cm, ledit enrobé comprenant les constituants suivants :
- un liant hydrocarboné sous forme d'émulsion cationique,
- des granulats,
- de l'eau d'apport et,
- au moins un additif,

Selon l'invention :
a) au moins un des additifs comprend une gomme synthétique, naturelle ou naturelle modifiée et,
b) on procède à l'ajout de cet additif comprenant une gomme synthétique, naturelle ou naturelle modifiée dans le flux d'émulsion ou dans l'eau d'apport préalablement au mélange de l'ensemble desdits constituants.

L'introduction de cet additif comprenant une gomme synthétique, naturelle ou naturelle modifiée dans le flux d'émulsion ou dans l'eau d'apport épaissit et rend thixotrope le mélange hydrocarboné lors de sa mise en oeuvre.

La thixotropie est la propriété réversible que possèdent certains matériaux de se fluidifier progressivement lorsqu'ils sont soumis à des actions mécaniques ou plus précisément de passer d'un état visqueux à un état fluide. On peut dire également qu'un corps thixotrope est un corps dont la viscosité diminue en fonction de la contrainte appliquée.

Cette caractéristique est d'un intérêt majeur dans le cadre de ce procédé. En effet, sous l'action de l'agitation consécutive au mélange des différents constituants à l'intérieur du malaxeur, de son déversement dans le traîneau applicateur et de l'action des vis répartitrices contenues à l'intérieur de ce traîneau, le mélange hydrocarboné, constamment sous agitation, garde une consistance fluide et onctueuse. Dès lors que l'on procède à son étalement, le mélange n'est plus sollicité mécaniquement et acquiert immédiatement une consistance élevée qui évite toute déformation de la couche mise en place, et toute migration des constituants même en fortes épaisseurs.

La rupture de l'émulsion intervient rapidement ce qui rend le caractère de réversibilité impossible.

Il est connu d'utiliser des gommes comme constituant de l'émulsion. D'une manière générale aucun ajout de gomme n'est nécessaire pour appliquer des enrobés coulés à froid traditionnels. Son emploi se révèle néanmoins indispensable dans le cadre de l'invention dès lors que les épaisseurs d'application dépassent 1,5 centimètres.

Les gommes de l'invention épaississent fortement les liants hydrocarbonés sous forme d'émulsions. Cependant, si le stockage du mélange émulsion/gomme était envisagé, ce mélange deviendrait rapidement trop visqueux de telle sorte qu'il ne pourrait plus être dosé de façon satisfaisante.

Le mélange émulsion/additif stocké de quelques heures à plusieurs jours présente à terme des amorces de rupture - cette rupture est appréciée au passage de celui-ci au travers un tamis d'ouverture de mailles de 0,160 millimètres - et ne permettait donc pas une conservation acceptable du mélange dans le temps, d'où l'obligation pour éviter ces désordres d'introduire cet additif dans le flux d'émulsion (préférentiellement) ou dans le flux d'eau d'apport.

Par conséquent, selon l'invention, la ou les gommes sont introduites dans le flux d'émulsion ou dans le flux d'eau d'apport. L'introduction de la gomme dans le flux d'émulsion diffère de la situation où la gomme est déjà présente dans l'émulsion.

L'invention concerne également un procédé de fabrication d'un enrobé coulé à froid ayant l'une ou l'autre des caractéristiques suivantes, considérées isolément ou en combinaison :
- la gomme synthétique, naturelle ou naturelle modifiée est choisie parmi les gommes agar, arabique, gélane, konjac, de guar, de tara, de xanthane et leurs mélanges,
- la gomme synthétique, naturelle ou naturelle modifiée est en solution dans un solvant approprié de type éthylène glycol, les proportions de solvants étant comprises entre 0 et 50 % en poids par rapport au poids de gomme et de solvant,
- les proportions d'additif comprenant une gomme synthétique, naturelle ou naturelle modifiée sont comprises entre 0,1 à 5 parties en poids pour 100 parties en poids d'émulsion,
- la teneur en émulsion de liant est comprise entre 6 et 15 parties en poids et de préférence entre 9,3 et 10 parties en poids pour 100 parties en poids d'enrobé,
- la teneur en liant résiduel est comprise entre 3,6 et 9 parties en poids et de préférence entre 5,6 et 6 parties en poids pour 100 parties en poids d'enrobé,
- les granulats comprennent des sables et des gravillons 100% concassés,
- les granulats ont un diamètre maximal (Dmax) supérieur ou égal à 6 mm,
- l'enrobé comprend en outre 5 à 10 % en poids de fines,
- le passant à 80 µm est compris entre 5 et 10% et le passant à 2 mm est compris entre 25% et 35%,
- le module de richesse de l'enrobé est compris entre 3,6 et 3,8,
- l'additif comprenant une gomme synthétique, naturelle ou naturelle modifiée et l'émulsion ou l'eau d'apport sont mélangés dans un mélangeur statique.

On entend par « proportions d'additif comprenant une gomme synthétique, naturelle ou naturelle modifiée», les proportions en poids de gomme et de solvant lorsque la gomme est en solution dans un solvant.

On entend par « liant résiduel », un liant hydrocarboné initialement dispersé dans une émulsion, récupéré par une méthode d'essai appropriée par évaporation de l'eau, mais qui contient encore l'essentiel des fractions légères qui ont pu lui être ajoutées pour le fluidifier ou le fluxer. La détermination de la teneur en liant résiduel est effectuée selon la norme EN 1431.

Le module de richesse est une valeur représentative de l'épaisseur de la pellicule de liant dans un mortier traité qui correspond au rapport du pourcentage de liant (exprimé en poids des granulats) à la racine cinquième de la surface spécifique des granulats enrobés (en mètres carrés par kilogramme).

La fabrication et la mise en oeuvre des enrobés coulés à froid sont effectuées simultanément à l'aide de dispositifs ou machines mobiles assurant de nombreuses fonctions. Ces machines sont pourvues de moyens permettant :
- le stockage des composants : granulats, émulsion, eau, additifs,
- le dosage des composants avec asservissement des débits en granulats, émulsion, eau et additifs,
- le malaxage de l'ensemble des constituants, et
- l'épandage : traîneau épandeur attelé à l'engin automoteur.

La présente invention concerne également un dispositif adapté pour la mise en oeuvre du procédé de l'invention.

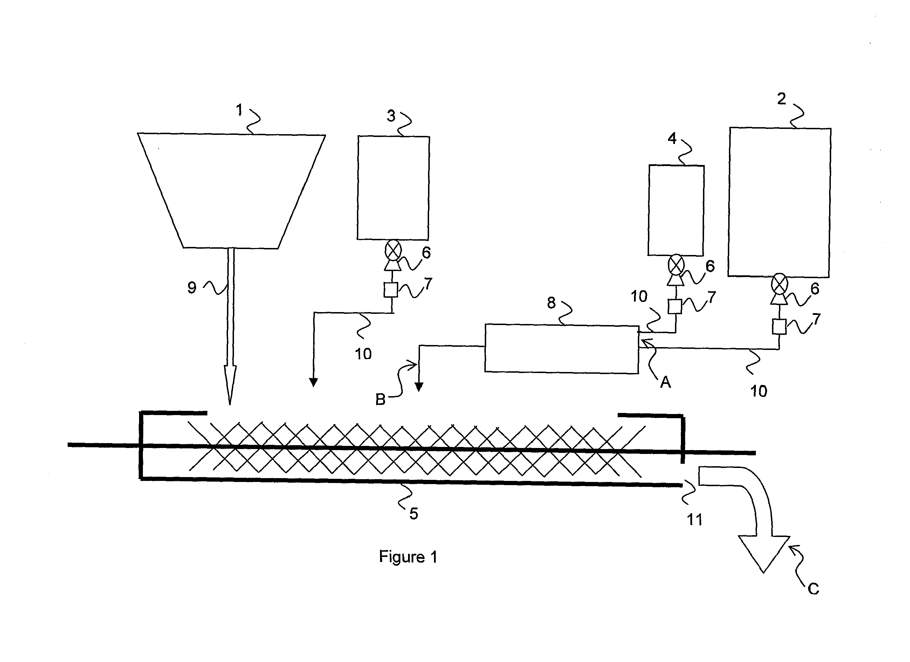

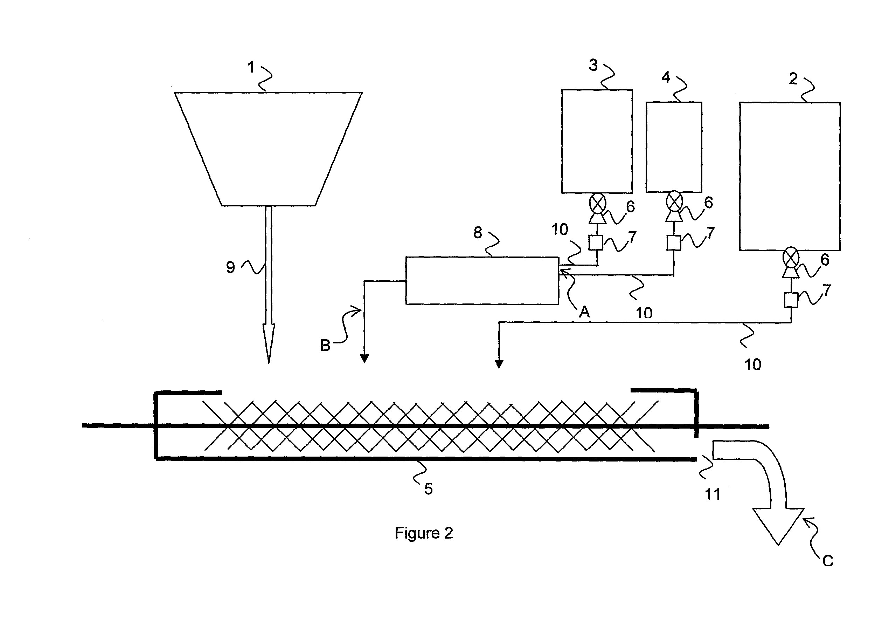

D'autres caractéristiques et avantages de l'invention ressortiront à la lecture de la description détaillée d'un exemple de réalisation du dispositif de l'invention, description faite à l'aide des figures 1 et 2 jointes à la présente demande.

Le dispositif de l'invention permet de préparer des enrobés selon le procédé décrit ci-dessus et de fabriquer des couches de revêtement routier.

Ce dispositif comprend une trémie réceptrice de granulats 1, un malaxeur 5, au moins trois réservoirs respectivement destinés à contenir l'eau d'apport 3, le liant sous forme d'émulsion 2 et au moins un additif. Selon l'invention, le dispositif comprend en outre :
- un réservoir 4 apte à contenir un additif comprenant une gomme synthétique, naturelle ou naturelle modifiée, et
- un moyen 8 permettant de mélanger préalablement l'additif comprenant une gomme synthétique, naturelle ou naturelle modifiée, avec l'eau d'apport
ou le flux d'émulsion avant d'être introduit dans le malaxeur 5.

De préférence, le moyen 8 permettant de mélanger préalablement l'additif et le flux d'émulsion ou l'eau d'apport est un mélangeur statique.

Selon le dispositif de l'invention, les granulats sont acheminés de la trémie réceptrice vers le malaxeur par des moyens d'apport 9. Ces moyens d'apport comportent généralement un tapis extracteur, par exemple, à entraînement hydrostatique.

Les différents réservoirs comportent également des moyens d'apport qui sont, en général, des canalisations 10.

Selon le dispositif de l'invention, l'additif comprenant une gomme naturelle, naturelle modifiée ou synthétique est préalablement mélangé avec l'eau d'apport ou le flux d'émulsion avant d'être introduit dans le malaxeur.

Selon le mode de réalisation préféré de l'invention, illustré sur la figure 1, l'additif est mélangé au flux d'émulsion avant mélange de tous les constituants. Pour ce faire, les réservoirs de l'additif et de l'émulsion sont reliés, par l'intermédiaire de canalisations 10, à un mélangeur statique 8. Le mélangeur statique permet de mélanger de manière continue et régulière l'additif et l'émulsion et d'obtenir ainsi un mélange homogène qui sera ensuite additionné aux autres constituants dans le malaxeur 5.

Selon ce mode de réalisation, le réservoir contenant l'eau d'apport peut être directement relié au malaxeur par l'intermédiaire d'une canalisation.

Les dosages en émulsion, additif et eau d'apport sont assurés par des pompes doseuses 6, et vérifiés en continu à l'aide de débitmètres 7. Des systèmes d'asservissement maintiennent donc constantes les proportions des matériaux au cours de la fabrication/application.

Selon un autre mode de réalisation, illustré sur la figure 2, l'additif est mélangé à l'eau d'apport avant mélange de tous les constituants. Les réservoirs d'eau d'apport et d'émulsion sont reliés à un mélangeur statique 8 permettant de mélanger de manière continue et régulière l'additif et l'eau d'apport. Ce mélange sera ensuite additionné aux autres constituants dans le malaxeur 5.

Selon ce mode de réalisation, le réservoir contenant l'émulsion est directement relié au malaxeur par l'intermédiaire d'une canalisation.

L'ensemble des constituants destinés à former l'enrobé sont mélangés dans le malaxeur 5. Le malaxage peut être réalisé avec des malaxeurs à deux arbres parallèles aptes au malaxage des matériaux de granularité jusqu'à 16 mm.

On récupère donc en sortie du malaxeur 11, au point C, un enrobé coulé à froid thixotropé permettant la réalisation de revêtement dont l'épaisseur est supérieure à l'épaisseur des revêtements obtenus avec des enrobés coulés à froid traditionnels. Ces revêtements sont, de préférence, des couches de roulement.

Les réservoirs de liant, d'eau et d'additif ont une capacité adaptée à celle de la trémie à minéraux. Ces cuves sont équipées d'indicateurs de niveaux et de système d'asservissement, contrôlant les pompes doseuses.

Le dispositif de l'invention peut comprendre en outre des réservoirs additionnels pour d'autres additifs.

L'épandage des enrobés est réalisé, en général, par l'intermédiaire d'une table d'application (non représentée) reliée au dispositif. Cette table d'application est constituée d'un traîneau de largeur fixe ou variable. Ce traîneau est doté d'une ou plusieurs articulations pour assurer une bonne mise au profil.

Les enrobés coulés à froid sont, en général, appliqués sur le support sans couche d'accrochage.

Le revêtement doit être compacté et la remise en circulation intervient après la fin du compactage.

Selon l'invention, les gommes peuvent être de nature synthétique, naturelle ou naturelle modifiée. On utilise de préférence des gommes naturelles.

On entend par « gommes naturelles » au sens de l'invention, les polymères naturels dérivés de sources végétales ou animales. Les gommes naturelles sont en général des composés hydrosolubles de type polysaccharide. Un polysaccharide est un composé formé d'un grand nombre d'unités de monosaccharides unies par des liens glucosidiques. En général, on utilise le terme « polysaccharide » pour les composés contenant plus de dix unités monosaccharides.

Les gommes naturelles sont des produits largement décrits dans la littérature. Parmi les gommes naturelles susceptibles d'être mises en oeuvre dans les compositions de l'invention, on peut citer :
- les gommes de biopolysaccharides d'origine microbienne telles que les gommes de gélane ou de xanthane,
- les gommes issues d'exsudats végétaux telles que la gomme arabique, la gomme adragante,
- les extraits d'algues tels que les carraghénanes ou l'agar-agar,
- les extraits végétaux tels que les gallactomannanes englobant la gomme de caroube, de guar et de tara.

Toutes ces gommes sont bien connues de l'homme de métier et sont décrites notamment dans "Handbook of Water Soluble Gums and Resins" de Robert L. Davidson, édité chez Mc Graw Hill Book Company (1980).

Les gommes naturelles préférées sont les gommes agar, arabique, gélane, konjac, de guar, de tara, de xanthane et leurs mélanges. Toutes ces gommes sont des polysaccharides hydrosolubles naturels.

Conviennent également à la mise en oeuvre de l'invention, les gommes naturelles modifiées hydrosolubles. La classe de ce type de gommes est illustrée notamment par les dérivés cellulosiques et par les amidons naturels modifiés.

Les dérivés cellulosiques englobent les éthers de la cellulose tels que la méthylcellulose, l'éthylcellulose, l'hydroxyéthylcellulose, l'hydroxypropylcellulose, l'éthylhydroxyéthylcellulose, la carboxyméthylcellulose de sodium, la carboxyméthylhydroxyéthylcellulose de sodium.

Les amidons peuvent être modifiés, par exemple, par fractionnement séparant alors l'amylose et l'amylopectine, par réticulation réalisée à l'aide d'agent difonctionnel du type épichlorhydrine, anhydride d'acide linéaire dicarboxylique, formaldhéhyde, par traitement enzymatique, acide, basique et/ou thermique. On peut également citer les dérivés d'amidons obtenus en substituant une certaine proportion de groupements hydroxyles par des groupements : acétate, hydroxyéthyle, hydroxypropyle, sulfate, phosphate.

A titre de gommes synthétiques, on peut citer les polysaccharides synthétiques hydrosolubles.

A titre de gommes synthétiques hydrosolubles, on peut également citer les polymères et copolymères vinyliques, acryliques, d'oxyde d'éthylène ainsi que leurs dérivés. Plus précisément, on peut citer les polymères suivants et leurs dérivés : les alcools polyvinyliques, les polyvinylpyrrolidones, les éthers méthyliques de polyvinyle, les acides polyacryliques et polyméthacryliques, leurs sels et leurs esters, les polyacrylamides et les polyméthacrylamides, les polymères d'oxyde d'éthylène, les acides polyacrylamidométhylpropanesulfonique,
ou des copolymères de ceux-ci. Toutes les gommes synthétiques précitées sont des produits connus et commercialisés. On peut se référer, pour leur mode de préparation, au brevet EP 0 079 837.

Selon le mode de réalisation préféré de l'invention, les gommes utilisées sont des polysaccharides hydrosolubles, de préférence naturels.

Les quantités d'additif comprenant une gomme naturelle, modifiée ou synthétique, c'est-à-dire les quantités de gomme et de solvant lorsque la gomme est en solution dans un solvant, sont toujours exprimées par rapport à l'émulsion et varient généralement de 0,1 à 10 parties, de préférence de 0,1 à 6 parties et mieux de 0,1 à 5 parties dans 100 parties d'émulsion.

Le liant sous forme d'émulsion cationique peut être par exemple à base de bitume. Le bitume est un mélange de matières hydrocarbonées naturelles issues de la fraction lourde obtenue lors de la distillation du pétrole, ou provenant de gisements naturels se présentant sous forme solide ou liquide, de densité comprise entre 0,8 et 1,2.

Le liant sous forme d'émulsion cationique peut également comprendre un liant d'origine végétal tel que le Vegecol commercialisé par la société Colas et décrit dans la demande de brevet FR 2 853 647, ou des bitumes modifiés par incorporation d'additifs de toute nature tels que des additifs en vue d'améliorer les caractéristiques d'adhésivité, en vue d'apporter artificiellement les propriétés nécessaires à la mise en émulsion cationique, par incorporation d'élastomères, sous forme de poudrette de caoutchouc ou autre, ou bien encore les bitumes améliorés par l'addition de polymères de différents types ; cette liste n'étant toutefois pas limitative.

On peut également citer à titre de liant sous forme d'émulsion pouvant être utilisé les émulsions de bitume de haute performance, notamment une émulsion de bitume modifiée par un ou plusieurs élastomères et plus particulièrement par du styrène-butadiène-styrène (SBS) de toute origine.

Les émulsions de bitume contiennent en général de 50 à 75% en poids de bitume, le reste étant constitué par de l'eau et des additifs éventuels.

On utilise de préférence des granulats provenant des roches massives 100% concassées. Ces granulats sont spécifiés selon la norme NF EN 13043. Les granulats constituent 85 à 95 % parties en poids pour 100 parties en poids d'enrobé coulé à froid en fonction de la granulométrie.

On utilise de préférence des granulométries continues ou discontinues avec un Dmax supérieur ou égal à 6 mm, c'est à dire de type 0/6 et 0/10. Les granulats sont d'abord mouillés. La trémie réceptrice de granulat comprend donc préférentiellement des granulats recomposés et humidifiés

On utilise également des fines qui ont pour double rôle de diminuer la tendance à la ségrégation et d'augmenter ou réduire la vitesse de rupture et la vitesse de prise.

De préférence, le pourcentage de particules passant 80 µm est compris entre 5 et 10%, et le pourcentage de passant 2 mm est compris entre 25 et 35 %.

L'eau est le milieu de mélange des constituants de l'enrobé coulé à froid.

Elle est introduite de trois façons complémentaires, en tant qu'humidité des granulats, en tant qu'eau d'apport et en tant que constituant de l'émulsion. L'eau d'apport est nécessaire pour prémouiller les granulats et les fines afin d'éviter la ségrégation et de faciliter leur enrobage par l'émulsion.

Enfin, les enrobés obtenus selon le procédé de l'invention permettent de fabriquer une couche de revêtement routier, de préférence, une couche de roulement d'épaisseur supérieure à 1,5 cm et de préférence comprise entre 2 et 4 cm. L'invention concerne donc également un procédé de réalisation d'une couche de roulement par application d'un enrobé coulé à froid obtenu par le procédé décrit ci-dessus.

Selon le procédé de réalisation de la couche de roulement, l'enrobé est appliqué à raison de 25 kg/m² à 80 kg/m², de préférence d'au moins 40 kg/m². Par exemple, l'enrobé est appliqué à raison de 60 kg/m² pour obtenir une couche de roulement de 3 cm d'épaisseur.

L'enrobé obtenu selon le procédé de l'invention peut être répandu sans travaux de préparation sur une chaussée présentant des déformations permanentes généralisées supérieures à 1 cm et/ou localisée supérieure à 3 cm selon la norme NF EN 13036-7 et NF P 98150.

L'exemple suivant illustre l'invention.

### Exemple

On utilise un dispositif tel que décrit dans la figure 1. Les dispositifs pour mettre en oeuvre le procédé de l'invention opèrent généralement à des cadences comprises entre 800 et 1 500 kilogrammes par minute d'Enrobé Coulé à Froid. Ces cadences varient en fonction de la configuration du chantier : par exemple 800 kilogrammes/minute en site urbain, 1 500 kilogrammes/minute sur itinéraire plat, dégagé en général en rase campagne.

La trémie réceptrice 1 comprend des granulats 0/10 recomposés et humidifiés. Ces granulats ont été obtenus à partir de granulats secs. Les granulats humidifiés sont obtenus à partir de 100 parties en poids de granulats secs auxquelles on ajoute 5,5 parties en poids d'eau.

En considérant la formule générale suivante et pour une cadence intermédiaire de 1 200 kilogrammes par minute d'Enrobé Coulé à Froid Epais, les consommations en fonction de la nature des constituants sont les suivantes :

| Formulation ECFE | Parties en poids | Quantités en Kg/mn pour chacun des constituants et pour un débit de : 1200 |
|---|---|---|
| Granulats humidifiés 0/10 : | | |
| - granulats secs | 100 | 992 |
| - eau | 5,5 | 55 |
| Eau d'apport | 5 | 50 |
| Liant sous forme d'émulsion | 10 | 99 |
| Solution d'additif « a »* | 0,5 | 5 |
| Total ECFE | 121 | 1200 |

| | | |
|---|---|---|
| (*) = Solution à 20% en poids d'additif "a" dans l'eau. L'additif a est choisi parmi les gomme agar, arabique, gélane, konjac, de guar, de tara, de xanthane et leurs mélanges. | | |

Les différentes pompes doseuses et débimètres en sortie des cuves à eau 3, à additifs 4, à émulsion 2 sont donc réglés de façon à respecter les valeurs des débits indiquées ci-dessus.

La cuve à eau peut contenir 4000 litres d'eau. La cuve à additif «a » peut contenir 400 litres. La cuve à émulsion peut contenir 5000 litres.

Les densités de l'additif « a » et de l'émulsion sont égales à 1. L'additif a est donc ajouté dans le flux d'émulsion. Le débit du mélange émulsion/additif est de 104 kg/mn ou 104 litres par minute.

Dans l'exemple ci-dessus, 5 parties de solution de l'additif a sont mélangées de façon extemporanée et en continu, à 99 parties d'émulsion en 1 minute. Le volume du mélangeur statique et de la canalisation amenant le mélange jusqu'au malaxeur est d'environ 2 litres. La sortie du mélangeur statique débouche dans le malaxeur. Il est donc possible de calculer le temps de contact, entre l'additif et l'émulsion de la façon suivante.

La vitesse d'écoulement est de 104 litres en 60 secondes soit 1,7 litres par seconde. Le temps de contact entre le point d'entrée A et le point de sortie B (voir figure 1) est donc de 1,2 seconde (2 litres / 1,7 litre par seconde). Le temps de contact entre additif et émulsion est donc très court.

De préférence, le temps de contact entre l'émulsion et l'additif est inférieur 10 secondes, de préférence inférieur à 5 secondes et mieux inférieur à 2 secondes.

On constate donc que l'invention diffère du cas où l'additif est un constituant de l'émulsion. En effet, lorsque l'additif est un constituant de l'émulsion le temps de contact est nécessairement supérieur à 10 secondes.

Le temps de contact particulièrement court entre l'additif et l'émulsion permet de s'affranchir des problèmes liés à la trop grande viscosité du mélange influant sur le dosage des constituants. De plus, cela permet également de prévenir la rupture de l'émulsion.

## Revendications

1. Procédé de fabrication d'un enrobé coulé à froid capable d'être mis en oeuvre sur une forte épaisseur d'au moins 1,5 cm, ledit enrobé comprenant les constituants suivants :
- un liant hydrocarboné sous forme d'émulsion cationique,
- des granulats,
- de l'eau d'apport et,
- au moins un additif,
**caractérisé en ce que :**
a) au moins un des additifs comprend une gomme synthétique, naturelle ou naturelle modifiée et,
b) on procède à l'ajout de cet additif comprenant une gomme synthétique, naturelle ou naturelle modifiée dans le flux d'émulsion ou dans l'eau d'apport préalablement au mélange desdits constituants.

2. Procédé de fabrication d'un enrobé coulé à froid selon la revendication 1 **caractérisé en ce que** la gomme synthétique, naturelle ou naturelle modifiée est choisie parmi les gommes agar, arabique, gélane, konjac, de guar, de tara, de xanthane et leurs mélanges, en solution dans un solvant approprié.

3. Procédé de fabrication d'un enrobé coulé à froid selon la revendication 1 ou 2 **caractérisé en ce que** les proportions d'additif comprenant une gomme synthétique, naturelle ou naturelle modifiée sont comprises entre 0,1 à 5 parties en poids pour 100 parties en poids d'émulsion.

4. Procédé de fabrication d'un enrobé coulé à froid selon l'une quelconque des revendications précédentes **caractérisé en ce que** la teneur en émulsion de liant est comprise entre 6 et 15 parties en poids pour 100 parties en poids d'enrobé.

5. Procédé de fabrication d'un enrobé coulé à froid selon l'une quelconque des revendications précédentes **caractérisé en ce que** les granulats ont un diamètre maximal (Dmax) supérieur ou égal à 6 mm.

6. Procédé de fabrication d'un enrobé coulé à froid selon l'une quelconque des revendications précédentes **caractérisé en ce que** le passant à 80 µm est compris entre 5 et 10% et le passant à 2 mm est compris entre 25% et 35%.

7. Procédé de fabrication d'un enrobé coulé à froid selon l'une quelconque des revendications précédentes **caractérisé en ce que** l'additif comprenant une gomme synthétique, naturelle ou naturelle modifiée et l'émulsion ou l'eau d'apport sont mélangés dans un mélangeur statique.

8. Procédé de fabrication d'un enrobé coulé à froid selon l'une quelconque des revendications précédentes **caractérisé en ce que** le mélange de l'ensemble desdits constituants est effectué dans un malaxeur.

9. Dispositif de fabrication de couches de revêtement routier comprenant une trémie réceptrice de granulats (1), un malaxeur (5), au moins trois réservoirs respectivement destinés à contenir l'eau d'apport (3), le liant sous forme d'émulsion (2) et au moins un additif, **caractérisé en ce que** ledit dispositif comprend en outre :
- un réservoir (4) apte à contenir un additif comprenant une gomme synthétique, naturelle ou naturelle modifiée, et
- un moyen (8) permettant de mélanger préalablement l'additif comprenant une gomme synthétique, naturelle ou naturelle modifiée avec l'eau d'apport ou le flux d'émulsion avant d'être introduit dans le malaxeur (5).

10. Dispositif de fabrication de couches de revêtement routier selon la revendication 9 **caractérisé en ce que** le moyen permettant de mélanger préalablement l'additif et le flux d'émulsion ou l'eau d'apport est un mélangeur statique.

11. Procédé de réalisation d'une couche de roulement par application d'un enrobé coulé à froid obtenu par le procédé selon l'une quelconque des revendications 1 à 8.

12. Procédé de réalisation d'une couche de roulement selon la revendication 11 **caractérisé en ce que** l'enrobé est appliqué à raison de 25 kg/m² à 80 kg/m², de préférence d'au moins 40 kg/m².

13. Procédé de réalisation d'une couche de roulement selon la revendication 11 ou 12 **caractérisé en ce que** son épaisseur est comprise entre 2 et 4 cm.

14. Procédé de réalisation d'une couche de roulement selon l'une quelconque des revendications 11 à 13 **caractérisé en ce que** l'enrobé est répandu sans travaux de préparation sur une chaussée présentant des déformations permanentes généralisées supérieures à 1 cm et/ou localisée supérieure à 3 cm selon la norme NF EN 13036-7 et NF P 98150.

15. Couche de roulement ayant une épaisseur supérieure à 1,5 cm susceptible d'être obtenue par le procédé selon l'une quelconque des revendications 11 à 14.
